# EUROPÄISCHE PATENTSCHRIFT

(11) **EP 0 848 145 B1**
(45) Veröffentlichungstag und Bekanntmachung des Hinweises auf die Patenterteilung: **02.01.2002**
(21) Anmeldenummer: 97117433.9
(22) Anmeldetag: 09.10.1997
(51) Int. Cl.: F02B 27/02

(54) **Sauganlage für eine Brennkraftmaschine der V-Bauart**
Intake system for a V-type combustion engine
Système d'admission pour moteur à combustion du type en V

(30) Priorität: 11.12.1996 DE 19651379
(43) Veröffentlichungstag der Anmeldung: 17.06.1998
(73) Patentinhaber: Bayerische Motoren Werke Aktiengesellschaft, 80788 München (DE)
(72) Erfinder: Bauer, Hans-Peter, 83533 Edling (DE)

(56) Entgegenhaltungen:
- WO-A-91/00419
- DE-A- 3 940 486
- DE-A- 4 437 663

## Beschreibung

Die Erfindung betrifft eine Sauganlage für eine Brennkraftmaschine der V-Bauart mit mehreren Saugrohren, die von einer sich in Maschinen-Längsrichtung erstreckenden Verteilerkammer linksseitig und rechtsseitig sowie hintereinander angeordnet abzweigen, sowie mit in der Verteilerkammer hintereinander angeordneten, den Saugrohren zugeordneten Trommeln, in welche ein Ansaugluftstrom seitlich eintreten und über eine am Trommel umfang vorgesehene Austrittsöffnung in das jeweilige Saugrohr austreten kann, wobei durch Verdrehen der Trommeln um ihre sich ebenfalls in Maschinen-Längsrichtung erstreckende Achse die effektiven Saugrohrlänge veränderbar ist.

Bekannt ist eine derartige Sauganlage aus der DE 39 40 486 A1. Mit dieser Sauganlage lassen sich zwar günstige Saugrohrlängen bei günstiger Saugrohrgeometrie realisieren, jedoch ist der Bauraumbedarf dieser bekannten Sauganlage unverhältnismäßig hoch.

Eine demgegenüber günstigere Sauganlage nach dem Oberbegriff des Anspruchs 1 aufzuzeigen, ist Aufgabe der vorliegenden Erfindung.

Die Lösung dieser Aufgabe ist dadurch gekennzeichnet, daß die Trommeln der linksseitigen Saugrohre eine gemeinsame Achse besitzen, die von der gemeinsamen Achse der den rechtsseitigen Saugrohren zugeordneten Trommeln beabstandet ist. Vorteilhafte Aus- und Weiterbildungen der Erfindung sind Inhalt der Unteransprüche.

Näher erläutert wird die Erfindung anhand eines bevorzugten Ausführungsbeispieles. Die beigefügte
- Fig. 1: zeigt eine erfindungsgemäße Sauganlage in perspektivischer Gesamtansicht,
- Fig. 2: zeigt einen Schnitt in der Schnitt-Ebene II-II aus Fig. 1 mit der durch einen Pfeil angegebenen Blickrichtung,
- Fig. 3: den Schnitt in der Ebene III-III aus Fig. 1 mit der durch einen Pfeil angegeben Blickrichtung, sowie
- Fig. 4: eine Darstellung entsprechend Fig. 1 mit abgenommenem Sauganlagen-Oberteil.

Die gezeigte Sauganlage 1 für eine Brennkraftmaschine der V-Bauart besteht u. a. aus einem Sauganlagen-Unterteil 1a sowie einem Sauganlagen-Oberteil 1b, wobei im Unterteil 1a sowie im Oberteil 1b Saugrohre 2a, 2b für die einzelnen Zylinder der nicht gezeigten Brennkraftmaschine vorgesehen sind. Diese Saugrohre 2a, 2b erhalten die Brennkraftmaschinen-Ansaugluft aus einer zentral innerhalb der Sauganlage 1 vorgesehenen, sich in Längsrichtung 3 (diese entspricht der Längsrichtung der Brennkraftmaschine) erstreckenden Verteilerkammer 4. Dabei sind die rechtsseitig bezüglich der Längsrichtung 3 liegenden Saugrohre 2a der rechten Zylinderbank der V-Brennkraftmaschine zugeordnet, während die linksseitig liegenden Saugrohre 2b der linken Zylinderbank der V-Brennkraftmaschine zugeordnet sind. Wie üblich sind dabei die Saugrohre 2a bzw. 2b für jede Zylinderbank in Längsrichtung 3 hintereinander angeordnet, wobei es sich beim hier gezeigten Ausführungsbeispiel um eine V8-Brennkraftmaschine handelt, d. h. die rechtsseitige sowie die linksseitige Zylinderbank der Brennkraftmaschine weist jeweils vier einzelne Zylinder auf.

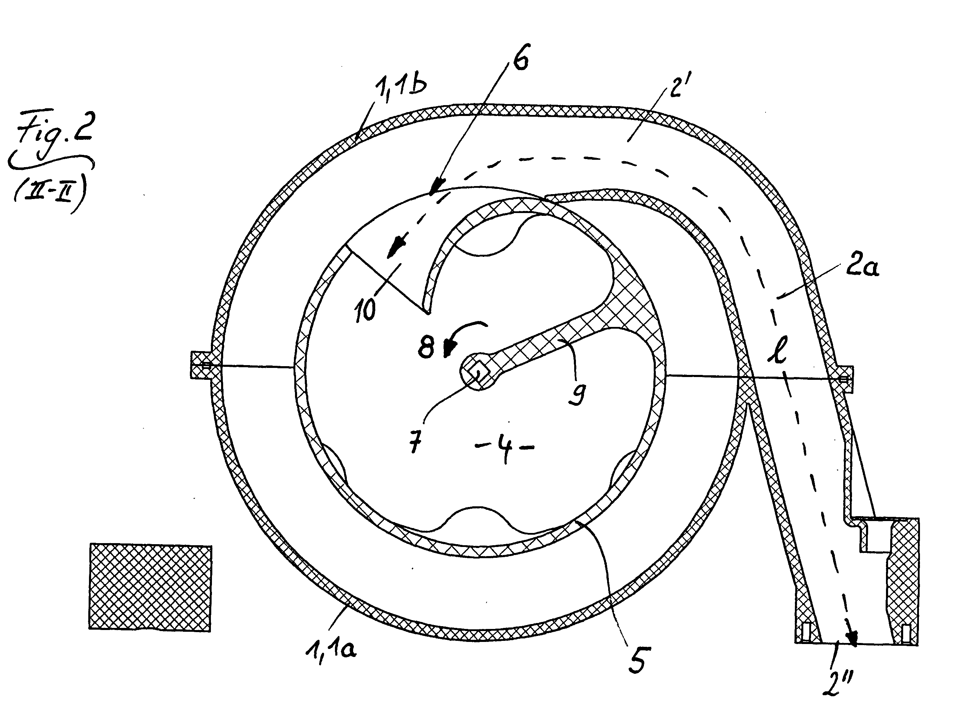

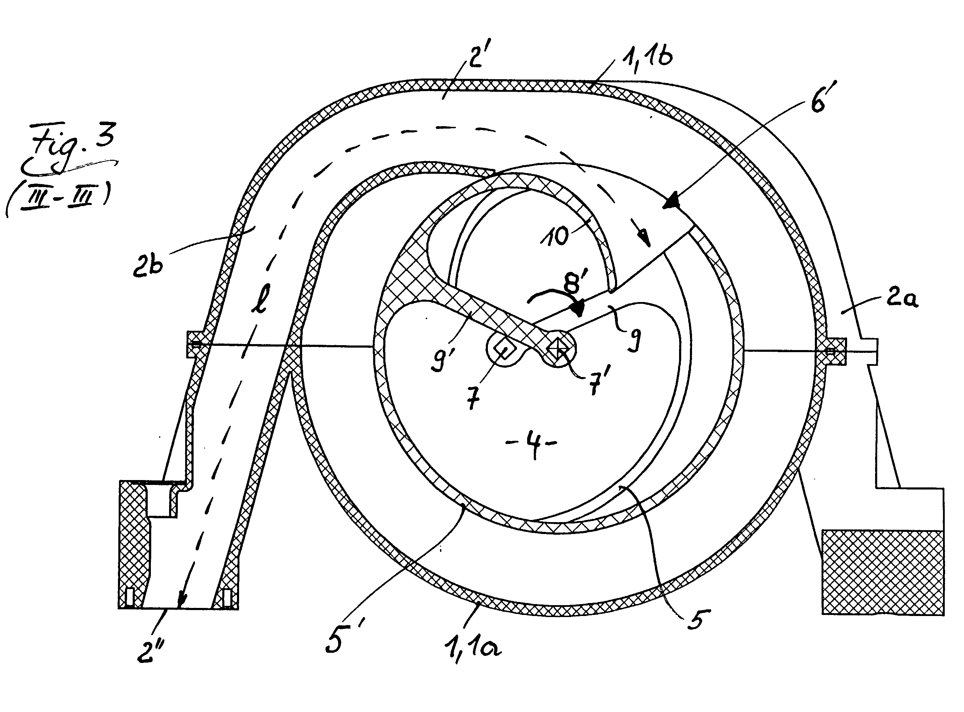

Wie insbesondere die Fig. 2, 3 zeigen, beginnt ein jeweils sog. starrer Abschnitt 2' der einzelnen Saugrohre 2a, 2b im oberen Bereich der Sauganlage 1 und führt von hier aus annähernd die Form eines Viertel-Kreisbogens beschreibend zum Mündungsbereich 2" jedes einzelnen Saugrohres 2a bzw. 2b, wobei die Sauganlage 1 mit diesen Mündungsbereichen 2" an die beiden Zylinderköpfe der V-Brennkraftmaschine angeflanscht ist, derart, daß sich die Saugrohr-Mündungsbereiche 2" mit den Einlaßkanal-Einlässen im nicht gezeigten Zylinderkopf decken.
Um die Länge der Saugrohre 2a, 2b über den jeweils starren Abschnitt 2' hinausgehend verändern zu können, ist jedem Saugrohr 2a eine in der Verteilerkammer 4 angeordnete Trommel 5 und jedem Saugrohr 2b eine in der Verteilerkammer 4 angeordnete Trommel 5' zugeordnet.

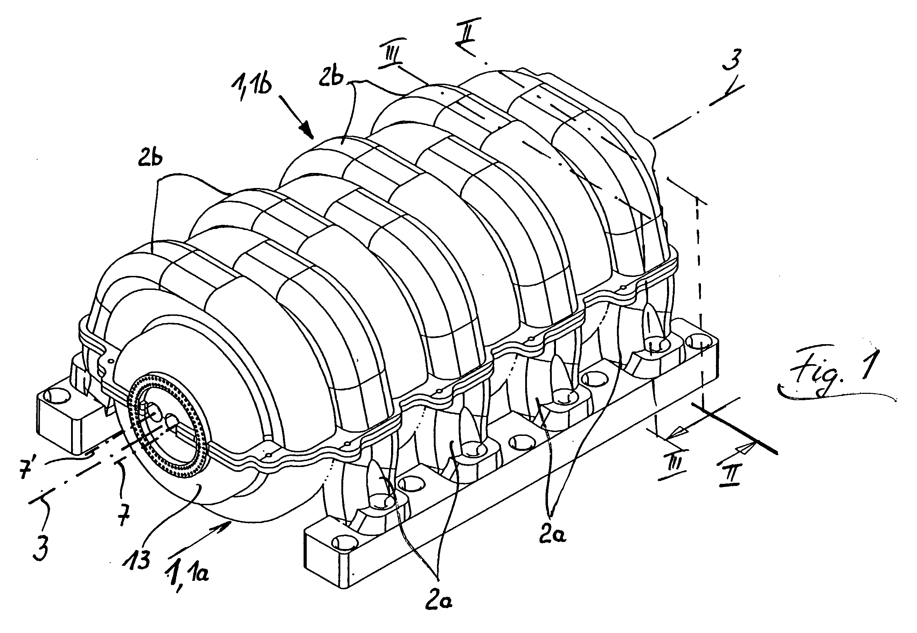

Jede Trommel 5, 5' weist an ihrer Umfangsfläche eine Austrittsöffnung 6 bzw. 6' für einen Brennkraftmaschinen-Ansaugluftstrom auf, wobei dieser Ansaugluftstrom von seitlich, d. h. der Längsrichtung 3 folgend in jede Trommel 5, 5' eintreten kann. Wie ersichtlich sind die im wesentlichen kreiszylindrischen Trommeln 5, 5' nämlich derart in der Verteilerkammer 4 angeordnet, daß deren Achse 7 bzw. 7' parallel zur Längsrichtung 3 ausgerichtet ist. Indem die kreiszylindrischen Trommeln 5, 5' im wesentlichen ohne Seitenwände ausgeführt sind, kann nun von der in Fig. 1 rückseitigen Stirnseite der Sauganlage 1 gemäß Pfeilrichtung III (= Blickrichtung für die Darstellung nach Fig. 3) ein Brennkraftmaschinen-Ansaugluftstrom in die Verteilerkammer 4 der Sauganlage 1 eintreten, wobei dieser Ansaugluftstrom zunächst in den Innenraum der hintersten Trommel 5 gelangt. Ein Teil dieses Ansaugluftstromes kann dann über die Austrittsöffnung 6 dieser hintersten Trommel 5 in das zugeordnete hinterste Saugrohr 2a eintreten, der Großteil des Ansaugluftstromes gelangt jedoch von der hintersten Trommel 5 in die nächste (zweite), dem Betrachter näher liegende Trommel 5', von welcher über deren Austrittsöffnung 6' ebenfalls ein Teil des Ansaugluftstromes in das zugeordnete zweithinterste Saugrohr 2b gelangen kann.
Dieser eben geschilderte Aufbau setzt sich bis nach vorne hin fort, so daß in die Innenräume sämtlicher Trommeln 5, 5' ein Ansaugluftstrom gelangen kann, wobei jeweils ein Teil dieses Ansaugluftstromes über die entsprechenden Trommel-Austrittsöffnungen 6,6' in das jeder Trommel 5, 5' zugeordnete Saugrohr 2a bzw. 2b eintreten kann.
Selbstverständlich ist die Sauganlage 1 nach hinten sowie nach vorne hin durch eine Abschlußwand 13 verschlossen, wobei durch die hintere (nicht sichtbare) Abschlußwand über eine geeignete Durchtrittsöffnung der Ansaugluftstrom für die Brennkraftmaschine in die Sauganlage 1 bzw. in deren Verteilerkammer 4 eintreten kann, während in der vorderen, sichtbaren Abschlußwand 13 gegen Luftaustritt abgedichtete Durchtrittsöffnungen für später noch erläuterte Drehwellen 11, 11' vorgesehen sind,

Jede Trommel 5, 5' ist um ihre sich in Maschinen-Längsrichtung 3 erstrekkende Achse 7 bzw. 7' in bzw. gegen Pfeilrichtung 8, 8' verdrehbar (vgl. Fig. 2, 3). In den Fig. 2, 3 ist dabei jede Trommel 5, 5' in einer derartigen Position dargestellt, daß sich für die einzelnen Saugrohre 2a bzw. 2b im wesentlichen die kürzestmögliche Saugrohrlänge l ergibt.
Wird bei der Darstellung gemäß Fig. 2 die Trommel 5 um ihre Achse 7 ausgehend von der gezeigten Position gemäß Pfeilrichtung 8 gegen den Uhrzeigersinn und bei der Darstellung gemäß Fig. 3 die Trommel 5' um ihre Achse 7' ausgehend von der gezeigten Position im Uhrzeigersinn gemäß Pfeilrichtung 8' verdreht, so wird durch ein derartiges Verdrehen die Saugrohrlänge l jedes Saugrohres 2a bzw. 2b vergrößert.

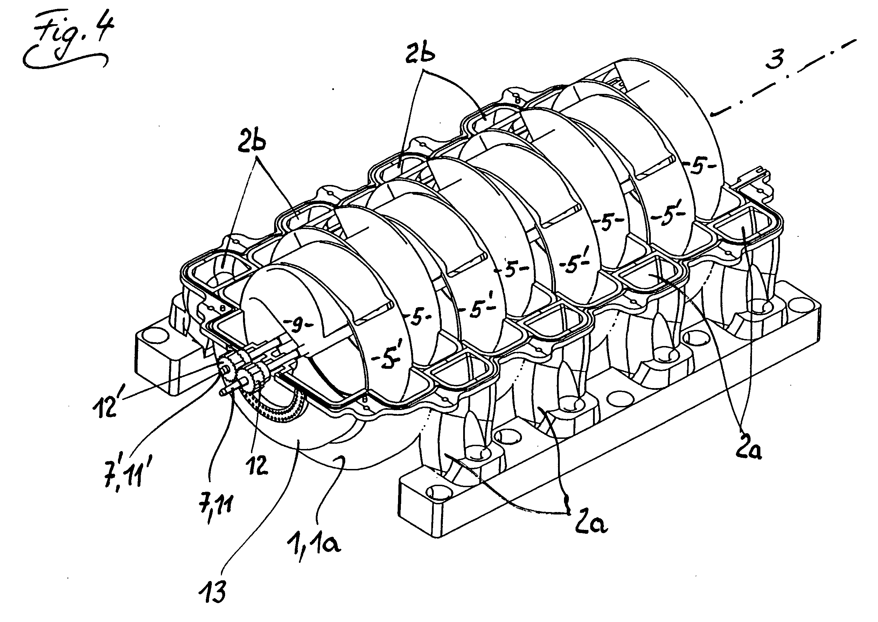

Wie ersichtlich (vgl. u.a. Fig. 4) besitzen die vier den linksseitigen Saugrohren 2b zugeordneten Trommeln 5' eine gemeinsame Achse 7', ebenso wie die (vier) Trommeln 5 für die rechtsseitigen Saugrohre 2a eine gemeinsame Achse 7 besitzen. Dabei sind die beiden Achsen 7, 7' voneinander beabstandet und im wesentlichen nebeneinander um ein gewisses Wegstück derart versetzt angeordnet, daß sich jede Achse 7 bzw. 7' näher am Mündungsbereich 2" des nicht zugeordenten Saugrohres 2b bzw. 2a befindet. Die Achse 7' aller Trommeln 5' liegt somit näher am Mündungsbereich 2" der Saugrohre 2a als an demjenigen der Saugrohre 2b, während die Achse 7 aller Trommeln 5 vom Mündungsbereich 2" der Saugrohre 2a weiter beabstandet ist als vom Mündungsbereich 2" der Saugrohre 2b.

Mit diesen Maßnahmen ergibt sich für die beschriebene Sauganlage 1 wie ersichtlich eine äußerst kompakte Bauweise. Insbesondere ist eine größere Saugrohrlängen-Variation möglich, als dies bei einer Anordnung sämtlicher Trommeln 5, 5' der linksseitigen und der rechtsseitigen Saugrohre 2a, 2b auf einer gemeinsamen Achse möglich wäre.
In diesem Zusammenhang sei auf den besonders einfachen und dabei höchste Funktionalität gewährleistenden Aufbau der Trommeln 5, 5' hingewiesen. Wie bereits erläutert, besitzen die im Querschnitt kreiszylindrischen Trommeln 5, 5' praktisch keine Seitenwände, sondern lediglich einen zur jeweiligen Achse 7 bzw. 7' führenden Steg 9, 9'. Im übrigen ist aus strömungsdynamischen Gründen die Austrittsöffnung 6, 6' an jeder TrommelUmfangsfläche in Form eines Einlauftrichters 10 ausgebildet.

Nicht nur im Hinblick auf eine optimale Funktionsweise, sondern ebenso um einen einfachen Aufbau zu erzielen, sind die Trommeln 5 für die rechtsseitige Saugrohrgruppe über eine gemeinsame Drehwelle 11 miteinander verbunden, ebenso wie die Trommeln 5' für die linksseitigen Saugrohre 2b von einer gemeinsamen Drehwelle 11' gehalten werden, wobei die Drehwellen 11, 11' mit den Trommel-Achsen 7 bzw. 7' zusammenfallen. Über die Drehwellen 11 bzw. 11' können die Trommeln 5, 5' somit um ihre jeweilige Achse 7 bzw. 7' verdreht werden.
Hierfür tragen die Drehwellen 11 bzw. 11' stirnseitig miteinander kämmende Zahnräder 12, 12'. Da es nämlich für die Funktion der Sauganlage 1 technisch lediglich sinnvoll ist, wenn sämtliche Saugrohre 2a, 2b die gleiche effektive Saugrohrlänge l besitzen, macht es nur Sinn, die Trommeln 5' der linksseitigen Saugrohrgruppe und die Trommeln 5 der rechtsseitigen Saugrohrgruppe miteinander und dabei gegensinnig zueinander zu verdrehen, wie aus einem Vergleich der Fig. 2 und 3 hervorgeht. Daher können die beiden Zahnräder 12, 12' auf den Drehwellen 11, 11' miteinander kämmen, wobei die Verstellbewegung über eines dieser Zahnräder 12, 12' durch ein (nicht gezeigtes) Antriebsritzel eingeleitet werden kann.

In den Figurendarstellungen nicht gezeigt sind Dichtelemente, die im Stoßbereich zwischen den Rändern der Trommeln 5, 5' sowie dem Rand des jeweils zugeordneten Saugrohres 2a bzw. 2b vorgesehen sein können. Diese Dichtelemente können dabei ähnlich Kolbenringen bspw. am Trommelumfang vorgesehen sein, es ist aber auch möglich, an der Sauganlage 1 bzw. an den Saugrohren 2a, 2b jeweils an geeigneter Stelle ein bspw. aufgespritzes Dichtelement vorzusehen. Daneben können eine Vielzahl weiterer Details durchaus abweichend vom gezeigten Ausführungsbeispiel gestaltet sein, ohne den Inhalt der Patentansprüche zu verlassen. Stets ergibt sich eine äußerst kompakt und einfach aufgebaute Sauganlage 1 für eine Brennkraftmaschine der V-Bauart mit variablen Saugrohrlängen l bei Gewährleistung höchster Funktionalität.
Mit den erfindungsgemäßen Merkmalen erhält man somit eine kompakt bauende Sauganlage für eine Brennkraftmaschine der V-Bauart, die für die einzelnen Saugrohre 2a, 2b jeweils eine kontinuierliche Änderung der effektiven Saugrohrlänge ermöglicht. Dabei ist die gezeigte Konstruktion auch insofern vorteilhaft, als die relativ großen Krümmungsradien der einzelnen Saugrohre 2a, 2b einen geringen Strömungswiderstand verursachen und somit einen hohen Füllungsgrad der Brennkraftmaschine gewährleisten. Vorteilhafterweise ergeben sich sowohl für die rechtsseitigen als auch für die linksseitigen Saugrohre 2a, 2b der erfindungsgemäßen Sauganlage 1 gleiche Geometrien. Ferner wird der V-Raum der Brennkraftmaschine durch den Einbau einer erfindungsgemäßen Sauganlage optimal ausgenutzt.

## Patentansprüche (Patentansprüche für folgende(n) Vertragsstaat(en): DE)

1. Sauganlage für eine Brennkraftmaschine der V-Bauart mit mehreren Saugrohren (2a, 2b), die von einer sich in Maschinen-Längsrichtung (3) erstreckenden Verteilerkammer (4) linksseitig und rechtsseitig sowie hintereinander angeordnet abzweigen, sowie mit in der Verteilerkammer (4) hintereinander angeordneten, den Saugrohren (2a, 2b) zugeordneten Trommeln (5, 5'), in welche ein Ansaugluftstrom seitlich eintreten und über eine am Trommelumfang vorgesehene Austrittsöffnung (6, 6') in das jeweilige Saugrohr (2a, 2b) austreten kann, wobei durch Verdrehen der Trommeln (5, 5') um ihre sich ebenfalls in Maschinen-Längsrichtung (3) erstreckende Achse (7, 7') die effektiven Saugrohrlänge (I) veränderbar ist,
**dadurch gekennzeichnet, daß** die Trommeln (5') der linksseitigen Saugrohre (2b) eine gemeinsame Achse (7') besitzen, die von der gemeinsamen Achse (7) der den rechtsseitigen Saugrohren (2a) zugeordneten Trommeln (5) beabstandet ist und daß die im Querschnitt im wesentlichen kreiszylindrischen Trommeln (5, 5') ohne Seitenwände ausgeführt sind und einen zur Achse (7, 7') der Trommel (5, 5') führenden Steg (9, 9') aufweisen.

2. Sauganlage nach Anspruch 1,
**dadurch gekennzeichnet, daß** die Austrittsöffnung (6, 6') an jeder Trommelumfangsfläche in Form eines Einlauftrichters (10) ausgebildet ist.

3. Sauganlage nach einem der vorangegangenen Ansprüche,
**dadurch gekennzeichnet, daß** die Trommeln (5, 5') für die rechtsseitige und für die linksseitige Saugrohrgruppe (2a, 2b) jeweils über eine gemeinsame Drehwelle (11, 11') miteinander verbunden sind, wobei die beiden Drehwellen (11, 11') miteinander kämmende Zahnräder (12, 12') tragen.

4. Sauganlage nach einem der vorangegangenen Ansprüche,
**dadurch gekennzeichnet, daß** im Stoßbereich zwischen den Trommelrändern sowie dem Rand des zugeordneten Saugrohres (2a, 2b) ein Dichtelement vorgesehen ist.

## Patentansprüche (Patentansprüche für folgende(n) Vertragsstaat(en): FR, GB)

1. Sauganlage für eine Brennkraftmaschine der V-Bauart mit mehreren Saugrohren (2a, 2b), die von einer sich in Maschinen-Längsrichtung (3) erstreckenden Verteilerkammer (4) linksseitig und rechtsseitig sowie hintereinander angeordnet abzweigen, sowie mit in der Verteilerkammer (4) hintereinander angeordneten, den Saugrohren (2a, 2b) zugeordneten Trommeln (5, 5'), in welche ein Ansaugluftstrom seitlich eintreten und über eine am Trommelumfang vorgesehene Austrittsöffnung (6, 6') in das jeweilige Saugrohr (2a, 2b) austreten kann, wobei durch Verdrehen der Trommeln (5, 5') um ihre sich ebenfalls in Maschinen-Längsrichtung (3) erstreckende Achse (7, 7') die effektiven Saugrohrlänge (l) veränderbar ist,
**dadurch gekennzeichnet, daß** die Trommeln (5') der linksseitigen Saugrohre (2b) eine gemeinsame Achse (7') besitzen, die von der gemeinsamen Achse (7) der den rechtsseitigen Saugrohren (2a) zugeordneten Trommeln (5) beabstandet ist.

2. Sauganlage nach Anspruch 1,
**dadurch gekennzeichnet, daß** die im Querschnitt im wesentlichen kreiszylindrischen Trommeln (5, 5') ohne Seitenwände ausgeführt sind und einen zur Achse (7, 7') der Trommel (5, 5') führenden Steg (9, 9') aufweisen.

3. Sauganlage nach Anspruch 1 oder 2,
**dadurch gekennzeichnet, daß** die Austrittsöffnung (6, 6') an jeder Trommelumfangsfläche in Form eines Einlauftrichters (10) ausgebildet ist.

4. Sauganlage nach einem der vorangegangenen Ansprüche,
**dadurch gekennzeichnet, daß** die Trommeln (5, 5') für die rechtsseitige und für die linksseitige Saugrohrgruppe (2a, 2b) jeweils über eine gemeinsame Drehwelle (11, 11') miteinander verbunden sind, wobei die beiden Drehwellen (11, 11') miteinander kämmende Zahnräder (12, 12') tragen.

5. Sauganlage nach einem der vorangegangenen Ansprüche,
**dadurch gekennzeichnet, daß** im Stoßbereich zwischen den Trommelrändern sowie dem Rand des zugeordneten Saugrohres (2a, 2b) ein Dichtelement vorgesehen ist.

## Claims (Claims for the following Contracting State(s): DE)

1. A suction system for a V-type internal combustion engine comprising a number of suction pipes (2a, 2b) branching to right and left and one behind the other from a distribution chamber (4) extending in the longitudinal direction (3) of the engine, and also comprising drums (5, 5') disposed one behind the other in the distribution chamber (4) and associated with the suction pipes (2a, 2b), an intake air stream being adapted to enter the drums from the side and flow out into the respective suction pipe (2a, 2b) through an outlet opening (6, 6') provided on the drum periphery, wherein the effective length (1) of the suction pipe can be altered by rotating the drums (5, 5') around their axis (7, 7'), which likewise extends in the longitudinal direction (3) of the engine,
**characterised in that** the drums (5') of the suction pipes (2b) on the left have a common axis (7') spaced apart from the common axis (7) of the drums (5) associated with the suction pipes (2a) on the right, and the drums (5, 5'), which are approximately circular cylindrical in cross-section, are without side walls and have a web (9, 9') leading to the axis (7, 7') of the drum (5, 5').

2. A suction system according to claim 1, **characterised in that** the outlet opening (6, 6') on each drum peripheral surface is in the form of an inlet funnel (10).

3. A suction system according to any of the preceding claims, **characterised in that** the drums (5, 5') for the group (2a, 2b) of suction pipes on the right side and left side are each connected and rotate on a common shaft (11, 11'), the two shafts (11, 11') bearing toothed wheels (12, 12') which mesh with one another.

4. A suction system according to any of the preceding claims, **characterised in that** a sealing element is provided in the abutting region between the drum walls and the edge of the associated suction pipe (2a, 2b).

## Claims (Claims for the following Contracting State(s): FR, GB)

1. A suction system for a V-type internal combustion engine comprising a number of suction pipes (2a, 2b) branching to right and left and one behind the other from a distribution chamber (4) extending in the longitudinal direction (3) of the engine, and also comprising drums (5, 5') disposed one behind the other in the distribution chamber (4) and associated with the suction pipes (2a, 2b), an intake air stream being adapted to enter the drums from the side and flow out into the respective suction pipe (2a, 2b) through an outlet opening (6, 6') provided on the drum periphery, wherein the effective length (1) of the suction pipe can be altered by rotating the drums (5, 5') around their axis (7, 7'), which likewise extends in the longitudinal direction (3) of the engine,
**characterised in that** the drums (5') of the suction pipes (2b) on the left have a common axis (7') spaced apart from the common axis (7) of the drums (5) associated with the suction pipes (2a) on the right.

2. A suction system according to claim 1, **characterised in that** the drums (5, 5'), which are approximately circular cylindrical in cross-section, are without side walls and have a web (9, 9') leading to the axis (7, 7') of the drum (5, 5').

3. A suction system according to claim 1 or claim 2, **characterised in that** the outlet opening (6, 6') on each drum peripheral surface is in the form of an inlet funnel (10).

4. A suction system according to any of the preceding claims, **characterised in that** the drums (5, 5') for the group (2a, 2b) of suction pipes on the right side and left side are each connected and rotate on a common shaft (11, 11'), the two shafts (11, 11') bearing toothed wheels (12, 12') which mesh with one another.

5. A suction system according to any of the preceding claims, **characterised in that** a sealing element is provided in the abutting region between the drum walls and the edge of the associated suction pipe (2a, 2b).

## Revendications (Revendications pour l'(les) Etat(s) contractant(s) suivant(s): DE)

1. Système d'admission de moteur thermique en V comportant plusieurs conduites d'admission (2a, 2b) placées l'une derrière l'autre et dérivant à gauche et à droite d'une chambre distributrice (4) s'étendant dans la direction longitudinale (3) du moteur, ainsi que des tambours (5, 5') associés aux conduites d'admission (2a, 2b), placés les uns derrière les autres dans la chambre distributrice (4), et dans lesquels une veine d'air d'aspiration peut entrer latéralement et sortir dans la conduite d'aspiration respective (2a, 2b), par un orifice de sortie (6, 6') prévu à la périphérie du tambour, la rotation des tambours (5, 5') autour de leur axe (7, 7') s'étendant également dans la direction longitudinale du moteur permettant de modifier la longueur effective des conduites d'admission (ℓ),
**caractérisé en ce que**
les tambours (5') des conduites d'admission (2b) du côté gauche ont un axe commun (7') éloigné de l'axe commun (7) des tambours (5) associés aux conduites d'admission (2a) du côté droit, et. les-tambours (5, 5') de section essentiellement cylindrique circulaire sont réalisés sans paroi latérale et ont une entretoise (9, 9') reliée à l'axe (7, 7') du tambour (5, 5').

2. Système d'admission selon la revendication 1,
**caractérisé en ce que**
l'orifice de sortie (6, 6') est réalisé sur chaque surface périphérique de tambour sous la forme d'une trémie d'entrée (10).

3. Système d'admission selon l'une quelconque des revendications précédentes,
**caractérisé en ce que**
les tambours (5, 5') des groupes de conduites d'admission du côté droit et du côté gauche (2a, 2b) sont reliés l'un à l'autre chaque fois par un arbre de rotation (11, 11') commun, les deux arbres de rotation (11, 11') portant des pignons (12, 12') engrenant l'un avec l'autre.

4. Système d'admission selon l'une quelconque des revendications précédentes,
**caractérisé en ce que**
dans la zone de jonction entre les bords des tambours et le bord des conduites d'admission associées (2a, 2b), on a un élément d'étanchéité.

## Revendications (Revendications pour l'(les) Etat(s) contractant(s) suivant(s): FR, GB)

1. Système d'admission de moteur thermique en V comportant plusieurs conduites d'admission (2a, 2b) placées l'une derrière l'autre et dérivant à gauche et à droite d'une chambre distributrice (4) s'étendant dans la direction longitudinale (3) du moteur, ainsi que des tambours (5, 5') associés aux conduites d'admission (2a, 2b), placés les uns derrière les autres dans la chambre distributrice (4), et dans lesquels une veine d'air d'aspiration peut entrer latéralement et sortir dans la conduite d'aspiration respective (2a, 2b), par un orifice de sortie (6, 6') prévu à la périphérie du tambour, la rotation des tambours (5, 5') autour de leur axe (7, 7') s'étendant également dans la direction longitudinale du moteur permettant de modifier la longueur effective des conduites d'admission (ℓ),
**caractérisé en ce que**
les tambours (5') des conduites d'admission (2b) du côté gauche ont un axe commun (7') éloigné de l'axe commun (7) des tambours (5) associés aux conduites d'admission (2a) du côté droit.

2. Système d'admission selon la revendication 1,
**caractérisé en ce que**
les tambours (5, 5') de section essentiellement cylindrique circulaire sont réalisés sans paroi latérale et ont une entretoise (9, 9') reliée à l'axe (7, 7') du tambour (5, 5').

3. Système d'admission selon l'une quelconque des revendications 1 ou 2,
**caractérisé en ce que**
l'orifice de sortie (6, 6') est réalisé sur chaque surface périphérique de tambour sous la forme d'une trémie d'entrée (10).

4. Système d'admission selon l'une quelconque des revendications précédentes,
**caractérisé en ce que**
les tambours (5, 5') des groupes de conduites d'admission du côté droit et du côté gauche (2a, 2b) sont reliés l'un à l'autre chaque fois par un arbre de rotation (11, 11') commun, les deux arbres de rotation (11, 11') portant des pignons (12, 12') engrenant l'un avec l'autre.

5. Système d'admission selon l'une quelconque des revendications précédentes,
**caractérisé en ce que**
dans la zone de jonction entre les bords des tambours et le bord des conduites d'admission associées (2a, 2b), il est prévu un élément d'étanchéité.
